Europäisches Patentamt

(19) European Patent Office

Office européen des brevets

(11) Numéro de publication: **0 237 437**
**B1**

(12) **FASCICULE DE BREVET EUROPEEN**

(45) Date de publication du fascicule du brevet:
30.05.90

(51) Int. Cl.⁵: **F16C 13/00**, B21B 13/14, D21G 1/02

(21) Numéro de dépôt: **87400543.2**

(22) Date de dépôt: **11.03.87**

(54) **Dispositif de réglage du profil d'un cylindre à enveloppe déformable.**

(30) Priorité: **13.03.86 FR 8603600**

(43) Date de publication de la demande:
**16.09.87 Bulletin 87/38**

(45) Mention de la délivrance du brevet:
**30.05.90 Bulletin 90/22**

(84) Etats contractants désignés:
**AT BE CH DE ES FR GB GR IT LI LU NL SE**

(56) Documents cités:
**DE-A- 3 022 491**
**FR-A- 2 245 865**
**FR-A- 2 277 260**
**FR-A- 2 572 313**
**GB-A- 2 011 555**
**GB-A- 2 042 125**
**GB-A- 2 060 822**
**US-A- 3 131 625**
**US-A- 4 007 522**
**US-A- 4 520 723**

(73) Titulaire: **CLECIM, 10, avenue de l'Entreprise,
F-95863 Cergy-Pontoise(FR)**

(72) Inventeur: **Quehen, André, 2A rue Emile Zola,
F-95300 Pontoise(FR)**

(74) Mandataire: **Le Brusque, Maurice et al, Cabinet Harlé et
Phélip 21, rue de la Rochefoucauld, F-75009 Paris(FR)**

## Description

L'invention a pour objet un dispositif de réglage du profil d'un cylindre à paroi déformable.

On utilise couramment la technique du laminage pour la réalisation de produits en feuille continue et en particulier de tôles métalliques.

Pour obtenir un réglage précis du profil d'une tôle en cours de laminage, on peut agir sur le cambrage ou le bombement des cylindres de la cage de laminoir et en particulier des cylindres d'appui, qui, généralement, encadrent les deux cylindres de travail de plus · faible diamètre. De nombreux dispositifs ont été proposés dans ce but mais, pour réaliser un réglage précis du profil des cylindres d'appui et de la pression appliquée le long de la génératrice de contact, on a été amené à proposer des cylindres dits à paroi déformable qui comprennent un arbre central fixe en forme de poutre allongée sur lequel est enfilée une enveloppe tubulaire montée rotative sur l'arbre autour de son axe par l'intermédiaire de paliers placés à ses extrémités. Entre la face interne de l'enveloppe et une face d'appui ménagée sur l'arbre sont disposés une pluralité de patins de maintien alignés en séries le long de l'axe et dont on peut régler la position radiale et la pression d'application sur la face interne de l'enveloppe en agissant sur des vérins interposés entre chaque patin et l'arbre fixe.

Généralement, chaque patin est constitué à cet effet d'une tige formant piston montée coulissante dans un alésage de l'arbre qui constitue le corps du vérin, la tige étant munie, du côté de l'enveloppe, d'une face d'appui cylindrique de rayon sensiblement égal à celui de l'enveloppe.

Etant donné que le patin fixe s'appuie sur l'enveloppe tournante il est nécessaire d'interposer un film d'huile entre les faces d'appui du patin et de l'enveloppe et, généralement, le patin est muni, sur sa face d'appui, d'un évidement formant poche alimenté en huile sous pression et fonctionnant donc par effet hydrostatique.

Le plus souvent, la face d'appui du vérin ne couvre qu'une partie réduite de l'enveloppe. Toutefois, on a déjà proposé de réaliser des patins couvrant un secteur angulaire relativement important de l'enveloppe et qui peut aller pratiquement jusqu'à 180°, comme on l'indique, par exemple, dans le document US-A 3 131 625. Si l'on désire placer un assez grand nombre de patins le long de la génératrice de contact, ces derniers ont une largeur relativement réduite qui est donc sensiblement inférieure à la longueur de l'arc de contact, le patin ayant donc une section rectangulaire. Il en résulte que le patin peut pivoter légèrement par rapport au point d'appui du vérin de poussée et d'ailleurs, dans le brevet 3.131.625, ce point d'appui est réalisé sous forme d'une rotule.

Cependant, cette possibilité de pivotement du patin par rapport au vérin peut présenter des inconvénients, le patin risquant de se mettre de travers par rapport à l'enveloppe.

On a également proposé, par exemple dans le document DE-OS 2 759 035 de réaliser des patins couvrant une longueur relativement importante de l'enveloppe, cette longueur étant sensiblement supérieure à la largeur du patin.

On voit que, dans différents cas, les patins de maintien peuvent avoir une section rectangulaire .Si l'on utilise, comme dans le cas du brevet US-A-3.131.625, un vérin unique, la largeur de la section de travail de ce dernier ne peut pas dépasser la largeur du patin et cette section de travail est donc sensiblement inférieure à la section d'appui du patin sur l'enveloppe. Si le patin doit développer un effort de poussée important sur l'enveloppe qui se répartit sur la section d'appui rectangulaire, il faut que le vérin soit alimenté sous une pression très importante.

Jusqu'à présent, de tels cylindres à enveloppes déformables étaient utilisés principalement pour le laminage de produits minces tels que le papier ou des métaux légers et les pressions d'appui n'étaient pas très élevées. Cependant, on envisage maintenant d'utiliser des cylindres à enveloppes déformables pour le laminage de tôles et, dans ce cas, les pressions d'appui sur l'enveloppe peuvent être beaucoup plus élevées. On a donc intérêt à augmenter la section d'appui du patin en lui faisant couvrir un secteur angulaire important et, en même temps, à augmenter le nombre des patins pour réaliser un réglage plus précis. De ce fait, les dimensions de chaque patin, dans le sens longitudinal axial et dans le sens transversal sont sensiblement différentes, la face d'appui du patin tournée vers l'arbre pouvant avoir une section rectangulaire très étroite.

Si l'on utilise un vérin unique, il doit être alimenté sous une pression très élevée ce qui, évidemment, rend plus compliqué et plus onéreux la réalisation des circuits hydrauliques.

On peut également associer à chaque patin un plus grand nombre de vérins de poussée répartis sur la longueur du patin et qui sont alimentés simultanément. Un tel mode de réalisation a été prévu par exemple dans le document DE-OS 3 022 491 ou dans le brevet GB 2 060 822. Cette disposition présente l'inconvénient de multiplier les vérins avec leurs circuits hydrauliques et surtout d'augmenter considérablement la longueur des joints étanches et par conséquent le risque de fuite.

L'invention a pour objet de nouvelles dispositions permettant de remédier à ces inconvénients.

L'invention couvre en outre un mode de réalisation particulier des patins et des vérins de poussée présentant d'importants avantages en particulier dans le cas où le patin présente une face d'appui rectangulaire.

Conformément à l'invention, les moyens hydrauliques de poussée des patins comprennent, pour chaque patin, un vérin hydraulique unique comprenant un piston prenant appui sur l'arbre et coulissant dans un logement ménagé dans l'épaisseur du patin, le piston et le logement ayant chacun une section de travail oblongue susceptible de couvrir à elle seule la plus grande partie de la face d'appui rectangulaire du patin et le piston est constitué par une plaque séparée et s'engageant dans le logement et prenant appui sur l'arbre par l'intermédiaire d'une face lisse susceptible de glisser sur une face d'appui plane ménagée sur l'arbre, ladite plaque étant li-

mitée latéralement par une face latérale montée coulissante le long de la face latérale du logement, un joint d'étanchéité étant interposé entre lesdites faces latérales du logement et de la plaque.

Dans un mode de réalisation particulièrement avantageux, chaque patin a, en section par un plan transversal à l'axe, la forme d'un croissant limité d'un côté par la face circulaire et de l'autre par une face plane dans laquelle est ménagé un évidement comprenant un fond dans lequel est ménagé le logement du piston du vérin et des parois latérales coulissant le long de faces de guidage ménagées sur l'abre central perpendiculairement à la face d'appui de ce dernier, un léger jeu étant ménagé entre les parois latérales du patin et les faces de guidage de l'arbre, de façon à ne pas gêner le coulissement du patin sous l'action du vérin.

De préférence, la section de travail oblongue du vérin est limitée par deux côtés longitudinaux parallèles aux grands côtés de la face d'appui rectangulaire du patin et raccordés à leurs extrémités par deux côtés cylindriques circulaires de façon à former une ligne de joint sans point anguleux.

Mais l'invention sera mieux comprise par la description suivante d'un mode de réalisation particulier, donné à titre d'exemple et représenté sur les dessins annexés.

La figure 1 est une vue schématique en coupe longitudinale d'un cylindre à enveloppe déformable selon l'invention;

la figure 2 est une vue schématique, en coupe transversale, d'un premier mode de réalisation du patin;

la figure 3 est une vue de dessus, en coupe suivant la ligne A–A de la figure 2;

la figure 4 et la figure 5 sont des vues en coupe transversale par deux plans différents d'un mode de réalisation plus perfectionné du patin.

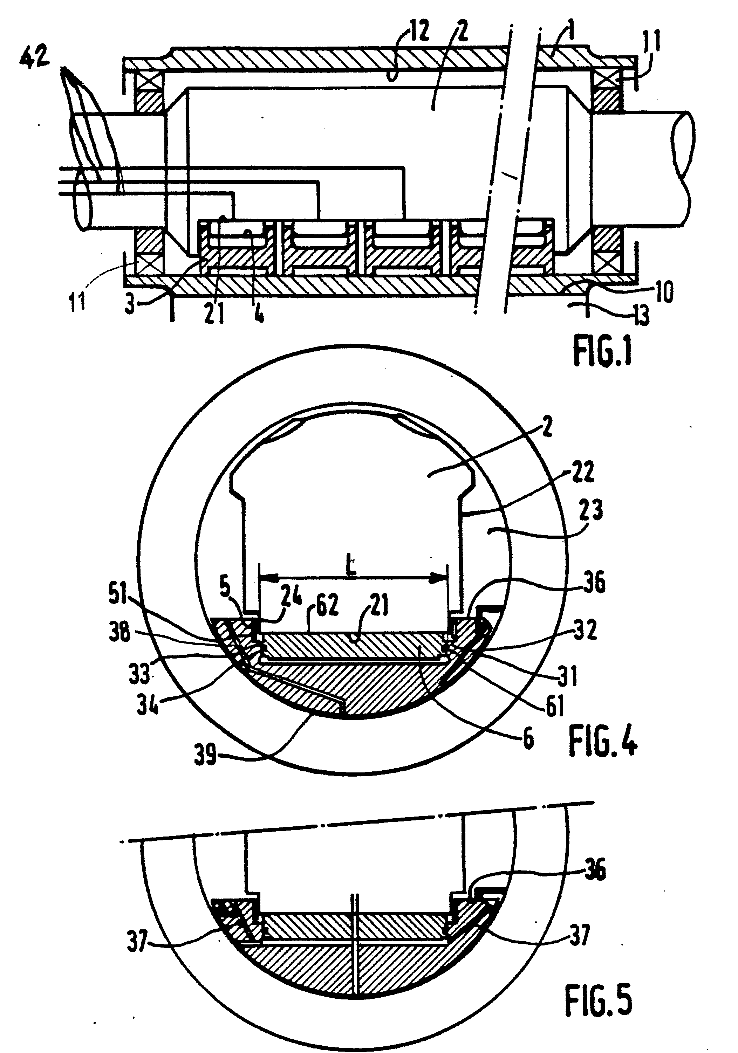

Sur la figure 1, on a représenté schématiquement un cylindre à enveloppe déformable comprenant une enveloppe tubulaire 1 montée rotative, par l'intermédiaire de paliers 11, sur un support fixe 2 en forme de poutre allongée enfilée à l'intérieur de l'enveloppe tubulaire 1.

Le cylindre 1 constitue par exemple un cylindre d'appui d'un laminoir et s'appui donc sur un cylindre de travail 13 le long d'une génératrice de contact 10.

Du côté du cylindre 13, l'arbre central 2 est muni d'une face plane 21 le long de laquelle sont disposés une série de patins de maintien 3 interposés entre la face d'appui 21 de l'arbre et la face interne 12 de l'enveloppe.

A chaque patin de maintien 3 est associé un vérin de poussée 4 alimenté par un circuit hydraulique 42 et qui permet de régler la position radiale du patin et la pression de poussée sur l'enveloppe 1.

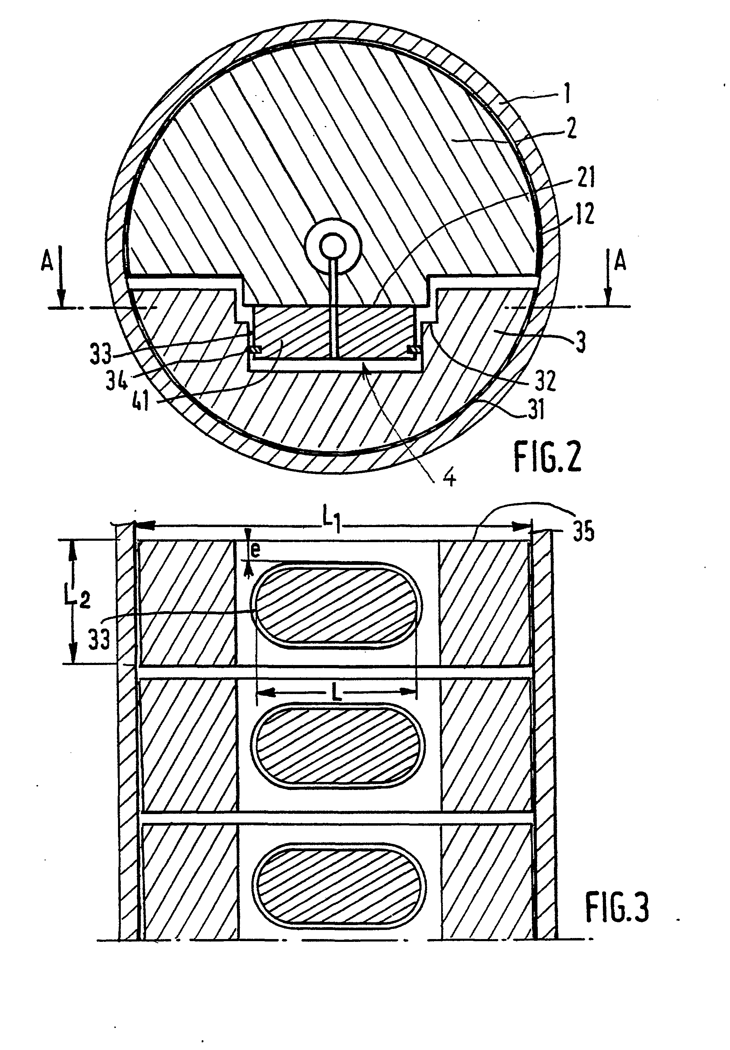

La figure 2 représente un mode de réalisation particulièrement simple du patin 3 et de son vérin de poussée.

Selon une caractéristique avantageuse de l'invention, chaque patin de maintien a une forme en croissant limitée du côté de l'enveloppe 1 par une face cylindrique 31 de rayon sensiblement égal à celui de la face interne 12 de l'enveloppe et, du côté opposé, par une face plane 32 parallèle et en vis-à-vis de la face d'appui 21 de l'arbre 2.

Le vérin 4 comprend, dans le mode de réalisation représenté, une tige 41 qui pénètre dans un logement 33 ménagé dans la partie centrale du patin, dans l'épaisseur de ce dernier.

Selon la caractéristique essentielle de l'invention, le logement 33 a une section oblongue qui s'étend sur une longueur L aussi grande que possible par rapport à la longueur totale L1 du patin ayant une largeur L2. D'une façon générale, les dimensions de la section oblongue du logement 33 sont déterminées de façon à laisser sur les côtés une épaisseur "e" de métal suffisante pour résister à la pression de service.

Le piston 41 a une section oblongue correspondant à celle du logement 33 avec le jeu nécessaire, un joint d'étanchéité 34 étant interposé entre les parois latérales du piston et du logement.

Comme on l'a représenté sur les figures, la section de travail du piston et du logement est donc limitée, de préférence, par deux côtés longitudinaux parallèles aux faces latérales 35 du patin limitant les grands côtés de la face d'appui rectangulaire et deux côtés cylindriques circulaires se raccordant tangentiellement aux côtés longitudinaux de façon à former une ligne de joint sans point anguleux.

Grâce à l'invention, on optimise la surface d'application de l'effort pour un encombrement donné, c'est-à-dire pour la surface de la face d'appui dont on dispose. On diminue donc le nombre et la longueur des joints et par conséquent les risques de fuite. L'usinage est très simplifié, ce qui diminue le coût du dispositif. En augmentant ainsi au maximum la surface d'application de l'effort, on augmente en conséquence l'effort transmissible pour une même pression de service, ou bien on utilise une pression réduite pour obtenir le même effort de réglage des patins.

Sur les figures 4 et 5, on a représenté un mode de réalisation plus perfectionné du patin.

La longueur L de la section de travail oblongue dépend comme on l'a vu, de la profondeur du logement 33 qui est déterminée elle-même par la course du patin et la nécessité d'assurer le guidage de celui-ci. Il en résulte que l'on dispose aux deux extrémités du patin de plages 36 qui peuvent avantageusement être utilisées pour y placer les dispositifs d'alimentation en huile. Ceci évite une alimentation centrale comme dans le cas de la figure 2. En effet, la poutre 2 peut être limitée par des faces latérales 22 qui dégagent au dessus des plages 36 un espace 23 dans lequel on peut placer les différents dispositifs d'alimentation et d'évacuation du fluide hydraulique. Les circuits correspondant ne sont pas représentés car ils peuvent être de tout type classique et ils aboutissent à des alésages 37 percés sur les côtés du patin et aboutissant dans le fond du logement 33, comme on l'a représenté sur la figure 5. De même, d'autres alésages 38 alimentés d'une autre façon peuvent être ménagés à l'intérieur du patin 3 de façon à alimenter des poches hydrostatiques 39 ménagées sur la face d'appui 31 du patin.

Il est particulièrement avantageux, comme on l'a représenté sur les figures 4 et 5, de séparer la fonction de guidage et la fonction d'étanchéité du vérin. En effet, chaque patin 3 est muni d'un évidement 5 qui peut couvrir toute la largeur du patin et dont le fond constitue la face d'appui 32 dans laquelle est ménagé le logement 33 du vérin. L'évidement 5 est limité par deux faces latérales 51 parallèles à l'axe du cylindre et qui coulissent le long de faces de guidage correspondantes 24 de l'arbre 2. Un léger jeu est cependant ménagé entre les faces de guidage de façon à ne pas gêner le coulissement du patin sous l'action du vérin et à lui permettre de s'orienter librement en particulier lorsque le film d'huile entre le patin et l'enveloppe est réalisé par effet hydrodynamique.

Il est en effet intéressant de permettre un léger déplacement du patin par rapport à l'arbre 2 et, dans ce but, le piston du vérin est constitué par une plaque 6 de section oblongue correspondant à celle du logement 33 et qui s'engage à l'intérieur de ce dernier. La plaque 6 est donc limitée par une paroi latérale 61 qui coulisse le long de la paroi latérale du logement 33, avec interposition d'un joint d'étanchéité 34. Mais la plaque 6 n'est pas solidaire de la poutre 2 et s'appuie simplement sur celle-ci par une face lisse 62 qui peut légèrement glisser le long de la face d'appui 21 de l'arbre 2.

De la sorte, le patin peut subir de légers déplacements limités simplement par le jeu laissé entre les faces de guidage 24 et 51, l'étanchéité restant toujours assurée par le joint 34.

L'invention s'applique donc particulièrement bien à la réalisation de patins utilisant un effet hydrodynamique tels que ceux décrits dans le brevet FR 2.572.313 de la demanderesse. Elle permet en particulier de faire couvrir au patin un secteur angulaire important dont l'étendue est déterminée par l'étude du comportement du film d'huile interposé par effet hydrodynamique entre le patin et l'enveloppe.

Mais l'invention n'est évidemment pas limitée au seul mode de réalisation qui vient d'être décrit et auquel on pourrait apporter les variantes sans s'écarter du cadre de protection défini par les revendications.

**Revendications**

1. Dispositif de réglage du profil d'un cylindre à paroi déformable comprenant un arbre central (2) en forme de poutre allongée, sur lequel est enfilée une enveloppe tubulaire (1) montée rotative autour de son axe et une pluralité de patins de maintien (3) alignés en série le long de l'axe entre l'arbre (2) et la face interne cylindrique (12) de l'enveloppe (1) et dont les dimensions, dans le sens longitudinal axial et dans le sens transversal sont sensiblement différentes, chaque patin (3) présentant, du côté de l'enveloppe (1) une face circulaire cylindrique (31) de rayon sensiblement égal à celui de la face interne (12) de l'enveloppe (1) et, du côté opposé, une face d'appui rectangulaire (32) placée en vis-à-vis de l'arbre, des moyens hydrauliques de poussée étant disposés entre l'arbre (2) et chaque patin (3) pour le réglage individuel de la position radiale de ce dernier, caractérisé par le fait que les moyens hydrauliques de poussée comprennent, pour chaque patin, un vérin hydraulique unique comprenant un piston (6) prenant appui sur l'arbre (2) et coulissant dans un logement (33) ménagé dans l'épaisseur du patin (3), que le piston (6) et le logement (33) ont chacun une section de travail oblongue susceptible de couvrir à elle seule la plus grande partie de la face d'appui rectangulaire (32) du patin (3) et que le piston est constitué par une plaque séparée (6) s'engageant dans le logement (33) et prenant appui sur l'arbre (2) par l'intermédiaire d'une face lisse (62) susceptible de glisser sur une face d'appui plane (21) ménagée sur l'arbre (2), ladite plaque (6) étant limitée latéralement par une face latérale (61) montée coulissante le long de la face latérale du logement (33), un joint d'étanchéité (34) étant interposé entre lesdites faces latérales du logement (33) et de la plaque (6).

2. Dispositif de réglage selon la revendication 1, caractérisé par le fait que chaque patin (3) a, en section par un plan transversal à l'axe, la forme d'un croissant limité d'un côté par la face circulaire (31) et de l'autre par une face plane (36) dans laquelle est ménagé un évidement (5) comprenant un fond (32) dans lequel est ménagé le logement (33) du piston (6) du vérin et des parois latérales (51) coulissant le long de faces de guidage (24) ménagées sur l'arbre central (2) perpendiculairement à la face d'appui (21) de ce dernier, un léger jeu étant ménagé entre les parois latérales (51) du patin et les faces de guidage (24) de l'arbre, de façon à ne pas gêner le coulissement du patin (3) sous l'action du vérin.

3. Dispositif selon l'une des revendications précédentes, caractérisé par le fait que la section de travail oblongue du vérin est limitée par deux côtés longitudinaux parallèles aux grands côtés de la face d'appui rectangulaire du patin et raccordés à leurs extrémités par deux côtés cylindriques circulaires de façon à former une ligne de joint sans point anguleux.

**Patentansprüche**

1. Durchbiegungssteuerung für eine Walze mit verformbarem Mantel bestehend aus einer mittigen als langgestreckter Träger ausgebildeten Welle (2), auf dem ein rohrförmiger, um seine Achse drehbar montierter Mantel (1) und mehrere Halteschuhe (3) angeordnet sind, die zwischen der Welle (2) und der zylindrischen Innenfläche (12) des Mantels (1) entlang der Achse in der Reihe fluchten mit in der axialen Längsrichtung und in der Querrichtung wesentlich unterschiedlichen Abmessungen, wobei jeder Schuh (3) auf der Seite des Mantels (1) eine zylindrische kreisförmige Fläche (31) mit einem im wesentlichen demjenigen der Innenfläche (12) des Mantels (1) entsprechenden Radius aufweist sowie auf der entgegengesetzten Seite eine rechteckige gegenüber der Welle angeordnete Auflagefläche (32), und wobei hydraulische Schubmittel zwischen der Welle (2) und jedem Schuh (3) für dessen individuelle Einstellung der radialen Lage angeordnet sind, dadurch gekennzeichnet, dass die hydraulischen Schubmittel für jeden Schuh einen einzelnen Hydraulikzylinder mit einem auf der Welle (2) sich abstützenden Kolben (6) umfassen, der in einem in der Masse des Schuhs (3) angeordneten Raum gleitbar ist, dass der Kolben (6) und der Raum (33) jeweils einen länglichen Arbeitsquerschnitt aufweisen, der allein den grössten Teil der rechteckigen Auflagefläche (32) des Schuhs (3) abdecken kann, und dass der Kolben aus einer einzelnen in den Raum (33) hineingreifenden Platte (6) besteht, die sich auf der Welle (2) über eine glatte Fläche (62) abstützt, welche auf einer flachen auf der Welle (2) angeordneten Auflagefläche gleiten kann, wobei die Platte (6) seitlich durch eine entlang der Seitenfläche des Raumes (33) gleitbar montierten Seitenfläche (61) begrenzt ist, und wobei ein Dichtungsring (34) zwischen diesen Seitenflächen des Raumes (33) und der Platte (6) dazwischengeschaltet ist.

2. Durchbiegungssteuerung nach Anspruch 1, dadurch gekennzeichnet, dass jeder Schuh (3) im Querschnitt durch eine quer zur Achse angeordneten Ebene als Halbmond ausgebildet ist, der auf einer Seite durch die kreisförmige Fläche (31) und auf der anderen Seite durch eine ebene Fläche (36) begrenzt ist, die eine Aussparung (5) mit einem Boden (32) aufweist, in welchen der Raum (33) von dem Zylinder-Kolben (6) und die Seitenwände (51) angeordnet sind, die entlang von auf der mittigen Welle (2) angeordneten, senkrecht zur Auflagefläche (21) derselben verlaufenden Führungsflächen (24) gleiten, wobei ein kleines Spiel zwischen den Seitenwänden (51) des Schuhs und den Führungsflächen (24) der Welle besteht, damit der Schuh (3) unter der Zylinderwirkung unbehindert gleiten kann.

3. Durchbiegungssteuerung nach einem der vorhergehenden Ansprüche, dadurch gekennzeichnet, dass der längliche Zylinder-Arbeitsquerschnitt durch zwei Längsseiten begrenzt ist, die parallel zu den grossen Seiten der rechteckigen Schuh-Auflagefläche sind und mit ihren Enden an zwei kreisförmigen zylindrischen Seiten so angeschlossen sind, dass eine Trennlinie ohne Eckpunkt entsteht.

**Claims**

1. Roll camber control device for a roll with a deformable envelope, comprising a central shaft (2), in the form of an elongated beam, on which is slipped a tubular envelope (1) mounted rotatably about its axis, and a plurality of retaining blocks (3) which are aligned in series along the axis between the shaft (2) and the cylindrical inner face (12) of the boring (1) and of which the dimensions in the axial longitudinal direction and in the transverse direction are substantially different, each block (3) having, towards the envelope (1), a cylindrical circular face (31) of a radius substantially equal to that of the inner face (12) of the envelope (1) and, on the opposite side, a rectangular bearing face (32) confronting the shaft, hydraulic thrust means being arranged between the shaft (2) and each block (3) for the individual adjustment of the radial position of the latter, characterized in that the hydraulic thrust means comprise, for each block, a single hydraulic jack comprising a piston (6) bearing on the shaft (2) and sliding in a boring (33) made in the thickness of the block (3), in that the piston (6) and the boring (33) each have an oblong working cross-section capable on its own of covering the greater part of the rectangular bearing face (32) of the block (3), and in that the piston consists of a separate plate (6) engaging into the boring (33) and bearing on the shaft (2) by means of a smooth face (62) capable of sliding on a plane bearing face (21) formed on the shaft (2), the said plate (6) being limited laterally by a lateral face (61) mounted slidably along the lateral face of the boring (33), a gasket (34) being interposed between the said lateral faces of the boring (33) and of the plate (6).

2. Adjusting device according to claim 1, characterized in that each block (3), as seen in a cross-section in a plane transverse to the axis, has the form of a crescent limited on one side by the circular face (31) and on the other by a plane face (36), in which is formed a recess (5) having a bottom (32), in which is made the boring (33) of the piston (6) of the jack, and side walls (51) sliding along guide faces (24) made on the central shaft (2) perpendicularly to the bearing face (21) of the latter, a slight play being provided between the side walls (51) of the block and the guide faces (24) of the shaft, so as not to impede the sliding of the block (3) under the action of the jack.

3. Device according to one of the preceding claims, characterized in that the oblong working cross-section of the jack is limited by two longitudinal sides parallel to the long sides of the rectangular bearing face of the block and connected at their ends by means of two circular cylindrical sides, so as to form a joining line without an angular point.

EP 0 237 437 B1

FIG.1

FIG.4

FIG.5

FIG.2

FIG.3